Europäisches Patentamt

European Patent Office

Office européen des brevets

(11) Veröffentlichungsnummer: **0 311 130 B1**

# EUROPÄISCHE PATENTSCHRIFT

(45) Veröffentlichungstag der Patentschrift: **08.07.92**

(21) Anmeldenummer: **88116710.0**

(22) Anmeldetag: **07.10.88**

(51) Int. Cl.5: **G01P 13/04**, G01P 5/07

(54) Verfahren und Vorrichtung zur Ermittlung der Bewegungsrichtung eines elektrisch leitenden Gegenstandes.

(30) Priorität: **07.10.87 DE 3733942**

(43) Veröffentlichungstag der Anmeldung:
**12.04.89 Patentblatt 89/15**

(45) Bekanntmachung des Hinweises auf die
Patenterteilung:
**08.07.92 Patentblatt 92/28**

(84) Benannte Vertragsstaaten:
**DE ES FR GB IT NL**

(56) Entgegenhaltungen:
**CH-A- 397 291**
**DE-A- 1 773 149**
**DE-A- 3 113 538**
**DE-A- 3 318 900**
**GB-A- 1 445 037**

(73) Patentinhaber: **ANDRAE LEONBERG GMBH**
**Neue Ramtelstrasse 48**
**W-7520 Leonberg(DE)**

Patentinhaber: **A. STEUDLER GMBH + CO. KG**
**Durlacher Strasse 35**
**W-7530 Pforzheim(DE)**

(72) Erfinder: **Förster, Michael, Dipl.-Ing.**
**Nauener Strasse 19a**
**W-7000 Stuttgart 70(DE)**
Erfinder: **Hentzschel, Hans-Peter, Dr. rer.-nat.**
**Osserstrasse 34**
**W-8000 München 80(DE)**
Erfinder: **Leiter, Alfred**
**Gesellstrasse 67a**
**W-7530 Pforzheim(DE)**
Erfinder: **Weber, Gerhard**
**Steigäckerstrasse 36**
**W-7142 Marbach/Neckar(DE)**

(74) Vertreter: **Zinnecker, Armin, Dipl.-Ing. Lorenz-Seidler-Gossel et al**
**Widenmayerstrasse 23**
**W-8000 München 22(DE)**

**Beschreibung**

Die Erfindung betrifft ein Verfahren zur Ermittlung der Bewegungsrichtung eines elektrisch leitenden Gegenstandes als Dämpfungsglied mittels eines induktiven Näherungssensors nach dem Oberbegriff des Anspruchs 1 und einen induktiven Näherungssensor zur Durchführung dieses Verfahrens nach dem Oberbegriff des Anspruchs 4. Weiterhin betrifft die Erfindung einen Ereigniszähler, insbesondere einen Umdrehungszähler und einen Durchflußmengenzähler.

Ein induktiver Näherungssensor besitzt einen bedämpfbaren LC-Schwingkreis und eine Auswerteschaltung zur Ermittlung der Schwingungsdämpfung. Der LC-Schwingkreis wird periodisch erregt, wobei der konstant bleibende zeitliche Abstand der Erregungen größer ist als die Abklingdauer der von dem Dämpfungsglied unbeeinflußten Schwingungen.

Aus der DE-OS 33 18 900 ist ein induktiver Näherungssensor bekannt. Die Dämpfung des in dem Näherungssensor vorhandenen LC-Schwingkreises ist durch die Annäherung eines elektrisch leitfähigen Gegenstandes (Dämpfungsglied) beeinflußbar. Je kürzer der Abstand zwischen dem induktiven Näherungssensor und dem elektrisch leitfähigen Gegenstand ist, desto stärker ist die Dämpfung der freien Schwingungen des Schwingkreises. Der Näherungssensor kann also zur Entfernungsmessung verwendet werden.

Insbesondere kann ein induktiver Näherungssensor dazu verwendet werden, den Vorbeigang eines als Dämpfungsglied wirkenden elektrisch leitenden Gegenstandes festzustellen. Diese Anwendung ist insbesondere bei Durchflußmengenzählern, beispielsweise Wasserzählern, von Bedeutung. Das Dämpfungsglied besteht in diesem Fall aus einem Zeiger oder einem sonstigen bewegten Glied des Durchflußmengenzählers. Dieser Zeiger kann beispielsweise bei jedem Umlauf einmal in den Bereich des Näherungssensors gelangen.

In gewissen Anwendungsfällen ist es erforderlich, nicht nur den Vorbeigang des Dämpfungsgliedes an dem induktiven Näherungssensor feststellen zu können, sondern darüberhinaus noch die Bewegungsrichtung dieses Dämpfungsgliedes.

Aus der DE-A-31 13 538 ist eine Vorrichtung zur Erkennung der Bewegungsrichtung eines Fahrzeuges, insbesondere eines Kraftfahrzeuges, auf induktivem Weg bekannt. In der Fahrbahn, auf der das Fahrzeug fährt, wird eine unsymmetrische Induktionsschleife vorgesehen. An diese Induktionsschleife ist eine Detektorschaltung angeschlossen, die die Bewegungsrichtung des Fahrzeuges ermitteln kann.

Aus der DE-A-1 773 149 ist eine Einrichtung zur Drehrichtungsanzeige von Antrieben, insbesondere von Gleichstrom- oder Wechselstrom-Tachometermaschinen, bekannt. Diese Vorveröffentlichung offenbart einen induktiven Bewegungssensor, bei dem durch die Bewegung eines unsymmetrisch ausgebildeten Elementes eine Spannung nach dem Generatorprinzip induziert wird.

Aufgabe der Erfindung ist es, ein Verfahren zur Ermittlung der Bewegungsrichtung eines Dämpfungsgliedes mittels eines induktiven Näherungssensors sowie einen induktiven Näherungssensor zur Durchführung eines derartigen Verfahrens anzugeben.

Diese Aufgabe wird bei einem Verfahren nach dem Oberbegriff des Anspruchs 1 durch die kennzeichnenden Merkmale des Anspruchs 1 gelöst. Das Dämpfungsglied ist in Bewegungsrichtung in Bezug auf seine Dämpfungseigenschaften unsymmetrisch ausgestaltet. Zunächst wird ein erster Zeitraum ermittelt, der mit der erstmaligen Überschreitung eines ersten, unteren, vorwählbaren Grenzwertes der Dämpfung des LC-Schwingkreises beginnt und mit der erstmaligen Überschreitung eines zweiten, oberen, vorwählbaren Grenzwertes der Dämpfung endet. Hierbei ist der obere Grenzwert kleiner als das Maß der Dämpfung der von dem Dämpfungsglied größtmöglich beeinflußten Schwingungen. Der untere Grenzwert ist größer als das Maß der Dämpfung der von dem Dämpfungsglied unbeeinflußten Schwingungen. Durch diese Wahl der Grenzwerte wird ein zuverlässiges Funktionieren des Verfahrens sichergestellt. Es versteht sich dabei von selbst, daß der obere Grenzwert größer ist als der untere Grenzwert.

Anschließend wird ein zweiter Zeitraum ermittelt, der mit der erstmaligen Unterschreitung des oberen Grenzwertes der Dämpfung beginnt und mit der erstmaligen Unterschreitung des unteren Grenzwertes der Dämpfung endet. Im allgemeinen ist dabei der obere Grenzwert bei der Ermittlung des ersten Zeitraumes derselbe wie der obere Grenzwert bei der Ermittlung des zweiten Zeitraumes. Weiterhin ist im allgemeinen der untere Grenzwert bei der Ermittlung des ersten Zeitraumes derselbe wie der untere Grenzwert bei der Ermittlung des zweiten Zeitraumes. Dies ist jedoch nicht zwingend.

Die beiden zu vergleichenden Zeiträume werden dadurch ermittelt, daß die Anzahl der periodischen Erregungen des LC-Schwingkreises gezählt wird. Da diese periodischen Erregungen mit konstanter Frequenz erfolgen, liefert die Anzahl dieser periodischen Erregungen ein Maß für die zu ermittelnden Zeiträume. Das erfindungsgemäße Verfahren wird demnach auf digitale Weise realisiert, was mit den bekannten Vorteilen verbunden ist.

Nach der Ermittlung der beiden Zeiträume werden diese miteinander verglichen. Da das Dämpfungsglied in Bewegungsrichtung unsymmetrisch ausgestaltet ist, unterscheiden sich die beiden genannten Zeiträume jedenfalls dann, wenn das Dämpfungsglied mit konstanter Geschwindigkeit bzw. Drehgeschwindigkeit bewegt wird. Durch eine geeignete Wahl der Grenzwerte kann darüberhinaus sichergestellt werden, daß auch dann eine zuverlässige Richtungserkennung möglich ist, wenn sich die Geschwindigkeit des Dämpfungsgliedes während des Vorbeigangs am induktiven Näherungssensor geringfügig ändert. Letzteres kann bei einem Durchflußmengenzähler der Fall sein: Während des Aufenthalts des Dämpfungsgliedes im Einwirkungsbereich des induktiven Näherungssensors kann sich die Durchflußmenge ändern. Das Maß dieser Änderung ist jedoch im allgemeinen im Verhältnis zur Verweildauer gering, so daß es keine Schwierigkeiten macht, die Grenzwerte und auch die sonstige Dimensionierung so festzulegen, daß eine einwandfreie Richtungserkennung möglich ist. Hierzu kann auch eine zweckentsprechende Ausgestaltung der Unsymmetrie des Dämpfungsgliedes beitragen.

Vorteilhafte Weiterbildungen sind in den Unteransprüchen beschrieben.

Nach einer vorteilhaften Weiterbildung der Erfindung wird während des ersten Zeitraumes die Anzahl der periodischen Erregungen des LC-Schwingkreises von einem vorgegebenen Wert ausgehend nach oben gezählt. Anschließend wird während des zweiten Zeitraumes die Anzahl der periodischen Erregungen des LC-Schwingkreises von dem ermittelten Zählstand ausgehend nach unten gezählt. Da die beiden Zeiträume durch die Unsymmetrie des Dämpfungsgliedes verschieden groß sind, ist auch die nach oben gezählte Anzahl von der nach unten gezählten Anzahl der periodischen Erregungen verschieden. Wenn in einer besonders vorteilhaften Weiterbildung als vorgegebener Wert der Wert Null gewählt wird, liefert der Zählstand des Zähles am Ende des zweiten Zeitraumes unmittelbar die Drehrichtung: Ist dieser Zählstand größer als Null, so war der erste Zeitraum größer als der zweite Zeitraum. Das Dämpfungsglied hat sich also in der ersten Richtung bewegt. Ist dagegen der Zählstand des Zählers negativ, so war der erste Zeitraum kleiner als der zweite Zeitraum. Das Dämpfungsglied hat sich also in der zweiten, zur ersten entgegengesetzten Richtung bzw. Drehrichtung bewegt.

Ein induktiver Näherungssensor zur Durchführung des erfindungsgemäßen Verfahrens besitzt einen periodisch erregten, durch Annähern eines elektrisch leitenden Gegenstandes (Dämpfungsglied) bedämpfbaren LC-Schwingkreis, wobei der zeitliche Abstand der Erregungen größer ist als die Abklingdauer der von dem Dämpfungsglied unbeeinflußten Schwingungen. Weiterhin besitzt er eine Auswerteschaltung zur Ermittlung der Schwingungsdämpfung. Zur Lösung der der Erfindung zugrundeliegenden Aufgabe ist das Dämpfungsglied in Bewegungsrichtung unsymmetrisch ausgestaltet. Weiterhin ist eine weitere Auswerteschaltung zur Ermittlung des ersten Zeitraumes und zur Ermittlung des zweiten Zeitraumes vorgesehen, wobei die beiden Grenzwerte, deren Überschreitung bzw. Unterschreitung die beiden Zeiträume begrenzt, die oben bereits angegebenen Bedingungen erfüllen müssen. Weiterhin ist ein Vergleicher zum Vergleichen der beiden Zeiträume vorgesehen. Die weitere Auswerteschaltung umfaßt ferner einen Zähler zum Zählen der Anzahl der periodischen Erregungen des LC-Schwingkreises.

In besonders vorteilhafter Weise ist der Zähler als vorwärtsrückwärts-Zähler ausgestaltet, so daß das oben bereits beschriebene Verfahren durchgeführt werden kann.

Die Erfindung schafft weiterhin einen Ereigniszähler, insbesondere einen Umdrehungszähler, einen Durchflußmengenzähler und einen Wasserzähler, der durch einen induktiven Näherungssensor der oben beschriebenen Art gekennzeichnet ist, welcher das erfindungsgemäße Verfahren durchführt.

Das Dämpfungsglied kann dreiecksförmig ausgestaltet sein, wobei die Spitze des Dreiecks in Bewegungsrichtung weist.

Ein Ausführungsbeispiel der Erfindung wird nachstehend anhand der beigefügten Zeichnungen im einzelnen beschrieben. In den Zeichnungen zeigt

Fig. 1     den Zeiger eines Durchflußmengenzählers mit einem an seinem Ende befindlichen, in Bewegungsrichtung unsymmetrischen Dämpfungsglied,

Fig. 2A     den Schwingungsverlauf eines LC-Schwingkreises ohne Beeinflussung durch das Dämpfungsglied,

Fig. 2B     den Schwingungsverlauf eines LC-Schwingkreises mit größtmöglicher Dämpfung durch das Dämpfungsglied,

Fig. 3A     den Verlauf der Dämpfung über der Zeit beim Vorbeigang eines in Bewegungsrichtung unsymmetrischen Dämpfungsgliedes an einem induktiven Näherungssensor,

Fig. 3B     den Zählstand eines Zählers, der während des ersten Zeitraums von Null ausgehend nach oben zählt und während des zweiten Zeitraums von dem am Ende des ersten Zeitraums erreichten Zählerstand ausgehend nach unten zählt,

Fig. 4A     den Verlauf der Dämpfung beim Vorbeigang eines in Bewegungsrichtung unsymmetrischen Dämpfungsgliedes an einem induktiven Näherungssensor bei einer gegenüber der Fig. 3A entgegengesetzten Richtung bzw. Drehrichtung und

Fig. 4B den Zählstand eines Zählers gemäß Fig. 3B bei einem Dämpfungsverlauf nach Fig. 4A.

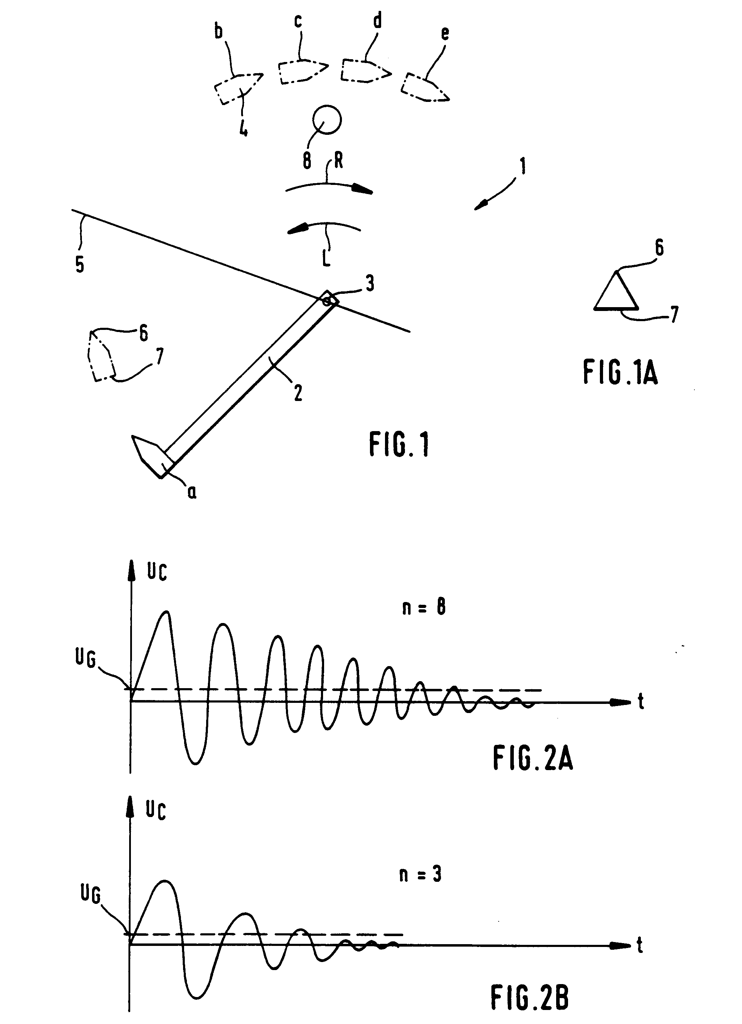

Fig. 1 zeigt schematisch einen Durchflußmengenzähler (Wasserzähler) 1, bei dem ein Zeiger 2 um eine Drehachse 3 drehbar gelagert ist. Die Höhe der Drehgeschwindigkeit des Zeigers 2 gibt ein Maß für die Durchflußmenge. Am Ende des Zeigers 2 ist ein elektrisch leitender Gegenstand, also ein Dämpfungsglied 4 angeordnet. Dieses Dämpfungsglied ist in Bewegungsrichtung, also in Drehrichtung um die Drehachse 3, unsymmetrisch ausgestaltet: Wenn sich der Zeiger 3 in Richtung des Pfeiles R bewegt, wird eine vorgegebene, durch die Drehachse 3 verlaufende Linie 5 zunächst mit der Spitze des Dämpfungsgliedes durchlaufen und erst anschließend mit dem in radialer Richtung verlaufenden Ende des Dämpfungsgliedes. Die Spitze des Dämpfungsgliedes ist mit 6 bezeichnet, das Ende des Dämpfungsgliedes 4 ist mit der Bezugsziffer 7 bezeichnet. Dieses Ende verläuft bezüglich der Drehachse 3 in radialer Richtung. Im einfachsten Fall ist das Dämpfungsglied dreiecksförmig ausgestaltet, wie in Fig. 1A dargestellt.

In der Stellung a befindet sich das Dämpfungsglied außerhalb des Einflußbereiches des induktiven Näherungssensors 8. Der Schwingungsverlauf im LC-Schwingkreis des induktiven Näherungssensors ist für diesen Fall in der Fig. 2A dargestellt. Die Kondensatorspannung UC des LC-Schwingkreises wird nur durch die Eigendämpfung des Schwingkreises gedämpft. Diese Eigendämpfung hängt von der Güte des Schwingkreises ab. Das Maß der Dämpfung kann dadurch bestimmt werden, daß die Anzahl der Schwingungen gezählt wird, deren Amplitude oberhalb des Grenzwertes UG liegt. Im ungedämpften Fall sind dies gemäß der Fig. 2A acht Schwingungen. In der Praxis kann diese Anzahl auch größer sein, beispielsweies 15 Schwingungen.

Die Fig. 2B zeigt den Verlauf der Kondensatorspannung UC des LC-Schwingkreises bei maximaler Dämpfung. Diese maximale Dämpfung wird dann erreicht, wenn sich das Dämpfungsglied 4 zwischen den Stellungen c und d in Fig. 1 befindet. In diesem Fall überschreiten lediglich drei Amplituden der Schwingung der Kondensatorspannung UC den Spannungsgrenzwert UG. Die Dämpfung ist also dann am größten.

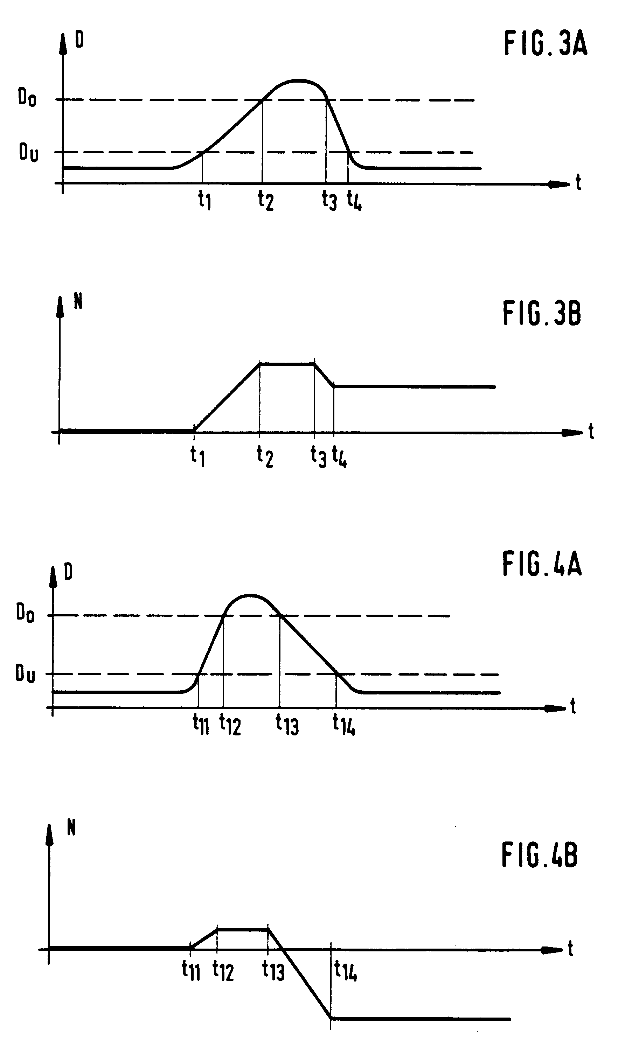

Während der Rotation des Dämpfungsgliedes 4 um die Achse 4 durchläuft dieses Dämpfungsglied 4 bei Drehung im Uhrzeigersinn R nacheinander die Stellungen b, c, d und e. Der entsprechende Verlauf der Dämpfung des periodisch erregten LC-Schwingkreises ist in Fig. 3A dargestellt. Der LC-Schwingkreis wird periodisch erregt. Der zeitliche Abstand der mit konstanter Periode erfolgenden Erregungen ist dabei größer als der Zeitraum, der zum Abklingen der vom Dämpfungsglied unbeeinflußten Schwingung des LC-Schwingkreises gemäß Fig. 2A erforderlich ist. Bei jeder der periodischen Erregungen des LC-Schwingkreises wird die Dämpfung ermittelt, beispielsweise durch Zählen der über der Grenzspannung UG liegenden Amplituden der Kondensatorspannung UC.

Die Fig. 3A zeigt den Verlauf der Dämpfung über der Zeit. Zu Beginn ist die Schwingung des LC-Schwingkreises vom Dämpfungsglied unbeeinflußt. Die Dämpfung hat also ihren geringstmöglichen Wert. Dementsprechend ist die Anzahl n der über der Grenzspannung UG liegenden Amplituden der Schwingung des LC-Schwingkreises am größten, da sich diese Anzahl n zur Dämpfung D reziprok verhält.

Wenn das Dämpfungsglied 4 die Stellung b in Fig. 1 erreicht hat, gelangt dieses Dämpfungsglied 4 in den Einflußbereich des induktiven Näherungssensors 8. Zum Zeitpunkt t1 in Fig. 3A ist die Dämpfung D so weit angestiegen, daß sie den unteren Grenzwert Du der Dämpfung D erreicht hat. In der Fig. 1 entspricht diesem Zeitpunkt t1 eine Stellung des Dämpfungsgliedes 4 zwischen den Stellungen b und c. Mit der Überschreitung des unteren Grenzwertes Du der Dämpfung D beginnt der Zähler, von Null ausgehend nach oben zu zählen, wie dies in Fig. 3B dargestellt ist. Zum Zeitpunkt t2 überschreitet die Dämpfung den oberen Grenzwert Do. Dieser Zeitpunkt entspricht etwa der Stellung c in Fig. 1. Wie aus Fig. 3B ersichtlich, beendet der Zähler mit Erreichen des Zeitpunktes t2 den Zählvorgang. Er behält ab dem Zeitpunkt t2 den erreichten Zählstand N bei.

Mit der Weiterbewegung des Dämpfungsgliedes 4 in Richtung R in Fig. 1 wird anschließend die Stellung d erreicht. Diese entspricht in Fig. 3A dem Zeitpunkt t3, zu dem der obere Grenzwert Do der Dämpfung D wieder unterschritten wird. Dementsprechend beginnt zu diesem Zeitpunkt t3 der Zähler - ausgehend vom erreichten Zählstand - nach unten zu zählen, wie dies in Fig. 3B dargestellt ist. Zum Zeitpunkt t4, dem eine Stellung zwischen den Stellungen d und e in Fig. 1 entspricht, wird der untere Grenzwert Du der Dämpfung D wieder unterschritten, so daß zu diesem Zeitpunkt der Zähler das Abwärtszählen beendet, wie in Fig. 3B dargestellt. Am Ende eines Vorbeigangs des Dämpfungsglieds 4 am induktiven Näherungssensor 8 hat also der Zähler den Zählstand N, der - wie aus Fig. 3B ersichtlich - positiv ist.

In den Fig. 3A und 3B sind die Verhältnisse bei einer Bewegung des Dämpfungsgliedes im Uhrzeigersinn, also in Richtung R der Fig. 1 dargestellt. Da sich das Dämpfungsglied 4 zunächst mit der Spitze dem induktiven Näherungssensor nähert, ist der Verlauf des Dämpfungsanstieges in Fig. 3A zwischen den Zeitpunkten t1 und t2 flach. Bei der Entfernung des Dämpfungsgliedes 4 vom Näherungssensor 8 (Stellungen d und e in Fig. 1) verläßt dieses Dämpfungsglied 4 den Bereich des Näherungssensors 8 mit seiner hinteren, radialen Kante 7. Die Entfernung des Dämpfungsgliedes vom Näherungssensor 8 erfolgt also relativ abrupt, weshalb der Verlauf der Dämpfung D zwischen den Zeitpunkten t3 und t4 in der Fig. 3A relativ steil ist.

Dementsprechend ist der erste Zeitraum zwischen den Zeitpunkten t1 und t2 größer als der zweite Zeitraum zwischen den Zeitpunkten t3 und t4. In weiterer Konsequenz zählt der Zähler während des längeren Zeitraumes t1 bis t2 länger nach oben, als er während des kürzeren Zeitraums t3 bis t4 nach unten zählt. Am Ende des gesamten Vorbeigangs verbleibt im Zähler also ein positiver Zählstand N. Daran, daß dieser Zählstand N positiv ist, kann man sofort und auf besonders einfache Weise erkennen, daß das Dämpfungsglied 4 im Uhrzeigersinn R umgelaufen ist.

Der untere Grenzwert Du der Dämpfung D ist größer als der Wert der Dämpfung D bei vom Dämpfungsglied 4 unbeeinflußten Schwingungen des LC-Schwingkreises. Der obere Grenzwert Do ist kleiner als die Dämpfung bei vom Dämpfungsglied größtmöglich beeinflußten Schwingungen des LC-Schwingkreises. Hierbei ist natürlich der obere Grenzwert Do größer als der untere Grenzwert Du.

Die Fig. 4A und 4B zeigen die Verhältnisse, die sich ergeben, wenn das Dämpfungsglied 4 in der Fig. 1 entgegen dem Uhrzeigersinn in Richtung L umläuft. In diesem Fall gelangt zunächst die hintere, radiale Kante 7 des Dämpfungsgliedes 4 in den Einflußbereich des induktiven Näherungssensors 8. Dementsprechend verläuft die Dämpfung zwischen den Zeitpunkten t11 und t12 steil nach oben. Das Dämpfungsglied 4 verläßt den Einflußbereich des induktiven Näherungssensors allmählich mit dem Verlauf seiner Spitze 6. Dementsprechend ist die Abnahme der Dämpfung zwischen den Zeitpunkten t13 und t14 in Fig. 4A flach. Als Konsequenz ergibt sich, daß der Zeitraum t11 bis t12 kleiner ist als der Zeitraum t13 bis t14. In Konsequenz hierzu ergibt sich der in Fig. 4B dargestellte Verlauf des Zählstands N in dem Zähler. Der Zähler beginnt zum Zeitpunkt t11 nach oben zu zählen. Da der Zeitraum zwischen t11 und t12 relativ kurz ist, wird nur ein geringer Zählstand zum Zeitpunkt t12 erreicht. Dieser Zählstand wird dann bis zum Zeitpunkt t13 beibehalten. Während des langen Zeitraumes zwischen den Zeitpunkten t13 und t14 zählt der Zähler nach unten. Da dieser zweite Zeitraum größer ist als der erste Zeitraum, wird am Ende des Zählvorganges ein negativer Zählstand erreicht, der anzeigt, daß sich das Dämpfungsglied 4 entgegen dem Uhrzeigersinn in Richtung L in Fig. 1 bewegt hat.

**Patentansprüche**

1. Verfahren zur Ermittlung der Bewegungsrichtung eines elektrisch leitenden Gegenstandes als Dämpfungsglied (4) mittels eines induktiven Näherungssensors (8), der einen bedämpfbaren LC-Schwingkreis und eine Auswerteschaltung zur Ermittlung der Schwingungsdämpfung aufweist,
   bei dem der LC-Schwingkreis periodisch erregt wird, wobei der zeitliche Abstand der Erregungen größer ist als die Abklingdauer der von dem Dämpfungsglied (4) unbeeinflußten Schwingungen,
   **dadurch gekennzeichnet,**
   daß das Dämpfungsglied (4) in Bewegungsrichtung (R, L) in Bezug auf seine Dämpfungseigenschaften unsymmetrisch ausgestaltet ist,
   daß ein erster Zeitraum (t1-t2, t11-t12) ermittelt wird, der mit der erstmaligen Überschreitung eines ersten, unteren, vorwählbaren Grenzwertes (Du) der Dämpfung (D) beginnt und mit der erstmaligen Überschreitung eines zweiten, oberen, vorwählbaren Grenzwertes (Do) der Dämpfung (D) endet,
   daß anschließend ein zweiter Zeitraum (t3-t4, t13-t14) ermittelt wird, der mit der erstmaligen Unterschreitung des oberen Grenzwertes (Do) der Dämpfung (D) beginnt und mit der erstmaligen Unterschreitung des unteren Grenzwertes (Du) der Dämpfung (D) endet,
   und daß beide Zeiträume miteinander verglichen werden, um die Bewegungsrichtung des Dämpfungsgliedes (4) zu ermitteln,
   wobei die Zeiträume dadurch ermittelt werden, daß die Anzahl (N) der periodischen Erregungen des LC-Schwingkreises gezählt wird,
   und wobei der obere Grenzwert (Do) kleiner ist als das Maß der Dämpfung der von dem Dämpfungsglied (4) größtmöglich beeinflußten Schwingungen und der untere Grenzwert (Du) größer ist als das Maß der Dämpfung der von dem Dämpfungsglied (4) unbeeinflußten Schwingungen.

2. Verfahren nach Anspruch 1, dadurch gekennzeichnet, daß während des ersten Zeitraumes die Anzahl (N) der periodischen Erregungen des LC-Schwingkreises von einem vorgegebenen Wert ausgehend nach oben gezählt wird und daß während des zweiten Zeitraumes die Anzahl (N) der periodischen Erregungen des LC-Schwingkreises von dem ermittelten Zählstand ausgehend nach unten gezählt wird.

3. Verfahren nach Anspruch 2, dadurch gekennzeichnet, daß der vorgegebene Wert gleich Null ist.

4. Induktiver Näherungssensor zur Durchführung des Verfahrens nach einem der vorhergehenden Ansprüche mit einem periodisch erregten, durch Annähern eines elektrisch leitenden Gegenstandes als Dämpfungsglied (4) bedämpfbaren LC-Schwingkreis, wobei der zeitliche Abstand der Erregungen größer ist als die Abklingdauer der von dem Dämpfungsglied (4) unbeeinflußten Schwingungen, und mit einer Auswerteschaltung zur Ermittlung der Schwingungsdämpfung, **gekennzeichnet durch** ein in Bewegungsrichtung in Bezug auf seine Dämpfungseigenschaften unsymmetrisch ausgestaltetes Dämpfungsglied (4), eine weitere Auswerteschaltung zur Ermittlung eines ersten Zeitraumes (t1-t2, t11-t12), der mit der erstmaligen Überschreitung eines ersten, unteren, vorwählbaren Grenzwertes (Du) der Dämpfung (D) beginnt und mit der erstmaligen Überschreitung eines zweiten, oberen, vorwählbaren Grenzwertes (Do) der Dämpfung endet, und zur Ermittlung eines zweiten Zeitraumes (t3-t4, t13-t14), der mit der erstmaligen Unterschreitung des oberen Grenzwertes der Dämpfung beginnt und mit der erstmaligen Unterschreitung des unteren Grenzwertes der Dämpfung endet, wobei der obere Grenzwert kleiner ist als das Maß der Dämpfung der von dem Dämpfungsglied größtmöglich beeinflußten Schwingungen und der untere Grenzwert größer ist als das Maß der Dämpfung der von dem Dämpfungsglied unbeeinflußten Schwingungen, wobei die weitere Auswerteschaltung einen Zähler zum Zählen der Anzahl (N) der periodischen Erregungen des LC-Schwingkreises enthält, und durch einen Vergleicher zum Vergleichen der beiden Zeiträume.

5. Induktiver Näherungssensor nach Anspruch 4, dadurch gekennzeichnet, daß die weitere Auswerteschaltung einen vorwärtsrückwärts-Zähler enthält.

6. Induktiver Näherungssensor nach einem der Ansprüche 4 und 5, dadurch gekennzeichnet, daß das Dämpfungsglied (4) eine in Bewegungsrichtung (R, L) weisende Spitze (6) aufweist.

7. Ereigniszähler, gekennzeichnet durch einen induktiven Näherungssensor nach einem der Ansprüche 4 bis 6.

8. Ereigniszähler nach Anspruch 7, dadurch gekennzeichnet, daß er als Umdrehungszähler ausgestaltet ist.

9. Umdrehungszähler nach Anspruch 8, dadurch gekennzeichnet, daß eine Umdrehung einer Einheit einer zählbaren physikalischen Größe (Länge, Masse, Volumen, Energie etc.) entspricht.

10. Ereigniszähler bzw. Umdrehungszähler nach Anspruch 8 oder 9, dadurch gekennzeichnet, daß der Umdrehungszähler ein Durchflußmengenzähler, insbesondere ein Wasserzähler, ist.

**Claims**

1. Method for ascertaining the direction of motion of an electrically conductive object as the damping element (4) by means of an inductive proximity sensor (6) having a dampable LC resonant circuit and an evaluation circuit for determining the damping of the oscillations, wherein the LC resonant circuit is periodically excited, the time interval of the excitations being longer than the decay time of the oscillations not affected by the damping element (4), characterized in that the damping element (4) has in the direction of motion (R, L) an asymmetrical design with respect to its damping properties, that a first time interval (t1-t2, t11-t12) is ascertained, starting when a preselectable first lower limiting value (Du) of the damping (D) is exceeded for the first time and terminating when a second preselectable upper limiting value (Do) of the damping (D) is exceeded for the first time, that subsequently a second time interval (t3-t4, t13-t14) is ascertained, starting when the damping (D) falls below the upper limiting value (Do) for the first time and terminating when the damping (D) falls below the lower limiting value (Du) for the first time, and that both time intervals are compared with each other so as to ascertain the direction of motion of the damping element (4), wherein the time intervals are determined in that the number (N) of the periodic excitations of the LC resonant circuit is counted, and wherein the upper limiting value (Do) is smaller than the extent of the damping of the oscillations influenced by the damping element (4) to maximum effect and the lower limiting value (Du) is greater than the extent of the damping of the oscillations not influenced by the damping element (4).

2. Method according to claim 1, characterized in that during the first time interval, the number (N) of the periodic excitations of the LC resonant circuit is, starting from a preset value, counted upwards and that during the second time interval, the number (N) of the periodic excitations of the LC resonant circuit is, starting from the ascertained counter reading, counted downwards.

3. Method according to claim 2, characterized in that the preset value is equal to zero.

4. An inductive proximity sensor for operating the method according to one of the preceding claims with a periodically excited LC resonant circuit dampable by the approach of an electrically conductive object as the damping element (4), the time interval of the excitations being longer than the decay time if the oscillations not influenced by the damping element (4),
and with an evaluation circuit for determining the damping of the oscillations,
characterized by
a damping element (4) asymmetrically designed in the direction of motion with respect to its damping properties,
a further evaluation circuit for ascertaining a first time interval (t1-t2, t11-t12) starting when a preselectable first lower limiting value (Du) of the damping (D) is exceeded for the first time and terminating when a second preselectable upper limiting value (Do) of the damping is exceeded for the first time, and for ascertaining a second time interval (t3-t4, t13-t14) starting when the damping falls below the upper limiting value for the first time and terminating when the damping falls below the lower limiting value for the first time, the upper limiting value being smaller than the extent of the damping of the oscillations influenced by the damping element to the maximum effect, and the lower limiting value being greater than the extent of the damping of the oscillations not affected by the damping element,
wherein the further evaluation circuit contains a counter for counting the number (N) of the periodic excitations of the LC resonant circuit, and by a comparator for comparing the two time intervals.

5. An inductive proximity sensor according to claim 4, characterized in that the further evaluation circuit contains a counter counting forwards and backwards.

6. An inductive proximity sensor according to one of claims 4 and 5, characterized in that the damping element (4) has a point (6) pointing in the direction of motion (R, L).

7. An occurrence counter characterized by an inductive proximity sensor according to one of claims 4 to 6.

8. An occurrence counter according to claim 7, characterized in that it is designed as a revolution counter.

9. A revolution counter according to claim 8, characterized in that one revolution corresponds to one unit of a countable physical value (length, mass, volume, energy etc.).

10. An occurrence counter or revolution counter according to claim 8 or 9, characterized in that the revolution counter is a flow meter, in particular a water meter.

**Revendications**

1. Procédé pour la détermination de la direction de mouvement d'un objet conducteur électrique comme organe d'amortissement (4) au moyen d'un capteur d'approche inductif (8) qui présente un circuit oscillant LC pouvant être amorti et un dispositif d'exploitation pour déterminer l'amortissement des oscillations,
dans lequel le circuit oscillant LC est excité périodiquement, l'intervalle dans le temps des excitations étant plus grand que la durée de décroissement des oscillations non influencées par l'organe amortisseur (4),
caractérisé en ce que l'organe amortisseur (4) est réalisé de façon asymétrique dans la direction de mouvement (R, L) en ce qui concerne ses propriétés d'amortissement,
en ce qu'on détermine un premier laps de temps (t1-t2, t11-t12) qui commence par le premier dépassement d'une première valeur limite (Du) inférieure pouvant être choisie à l'avance de l'amortissement (D), et qui se termine par le premier dépassement d'une deuxième valeur limite (Do) supérieure pouvant être choisie à l'avance de l'amortissement (D),
en ce que l'on détermine ensuite un deuxième laps de temps (t3-t4, t13-t14) qui commence par le premier passage en dessous de la valeur limite (Do) supérieure de l'amortissement (D) et se termine par le premier passage en dessous de la valeur limite (Du) inférieure de l'amortissement (D),

et en ce que les deux laps de temps sont comparés l'un à l'autre pour déterminer la direction de mouvement de l'organe amortisseur (4),

les laps de temps étant déterminés en comptant le nombre (N) des excitations périodiques du circuit oscillant LC

et où la valeur limite (Do) supérieure est plus petite que la mesure de l'amortissement des oscillations influencées le plus possible par l'organe amortisseur (4) et la valeur limite (Du) inférieure étant plus grande que la mesure de l'amortissement des oscillations non influencées par l'organe d'amortissement (4).

**2.** Procédé selon la revendication 1, caractérisé en ce que, pendant le premier laps de temps, on compte le nombre (N) des excitations périodiques du circuit oscillant LC vers le haut en partant d'une valeur préréglée, et en ce que, pendant le deuxième laps de temps, on compte le nombre (N) des excitations périodiques du circuit oscillant LC vers le bas en partant de la position de comptage déterminée.

**3.** Procédé selon la revendication 2, caractérisé en ce que la valeur préréglée est égale à zéro.

**4.** Capteur d'approche inductif pour la mise en oeuvre du procédé selon l'une des revendications précédentes comprenant un circuit oscillant LC excité périodiquement, pouvant être amorti par l'approche d'un objet électriquement conducteur comme organe amortisseur (4), où l'intervalle dans le temps des oscillations est plus grand que la durée de décroissement des oscillations non influencées par l'organe amortisseur (4),

et avec un dispositif d'exploitation pour déterminer l'amortissement des oscillations, caractérisé par

un organe amortisseur (4) réalisé de façon asymétrique dans la direction de mouvement en ce qui concerne ses propriétés d'amortissement,

un dispositif d'exploitation supplémentaire pour déterminer un premier laps de temps (t1-t2, t11-t12), qui commence par le premier dépassement d'une première valeur limite (Du) inférieure pouvant être choisie à l'avance de l'amortissement (D) et se termine par le premier dépassement d'une deuxième valeur limite (Do) supérieure pouvant être choisie à l'avance de l'amortissement, et pour déterminer un deuxième laps de temps (t3-t4, t13-t14) qui commence par le premier passage en dessous de la valeur limite supérieure de l'amortissement et qui se termine par le premier passage en dessous de la valeur limite inférieure de l'amortissement, la valeur limite supérieure étant plus petite que la mesure de l'amortissement des oscillations influencées le plus possible par l'organe amortisseur, et la valeur limite inférieure est plus grande que la mesure de l'amortissement des oscillations non influencées par l'organe amortisseur,

dans lequel le dispositif d'exploitation supplémentaire comporte un compteur pour compter le nombre (N) des excitations périodiques du circuit oscillant LC

et par un comparateur pour comparer les deux laps de temps.

**5.** Capteur d'approche inductif selon la revendication 4, caractérisé en ce que le dispositif d'exploitation supplémentaire comporte un compteur en avant-en arrière.

**6.** Capteur d'approche inductif selon l'une des revendications 4 et 5, caractérisé en ce que l'organe amortisseur (4) présente une pointe (6) indiquant la direction de mouvement (R, L).

**7.** Compteur d'évènements, caractérisé par un capteur d'approche inductif selon l'une des revendications 4 à 6.

**8.** Compteur d'évènements selon la revendication 7, caractérisé en ce qu'il est réalisé sous la forme d'un compte-tours.

**9.** Compte-tours selon la revendication 8, caractérisé en ce qu'un tour d'une unité correspond à une grandeur physique pouvant être comptée (longueur, masse, volume, énergie etc.).

**10.** Compteur d'évènements ou compte-tours selon la revendication 8 ou 9, caractérisé en ce que le compte-tour est un compteur du débit d'écoulement, notamment un compteur à eau.

FIG.1

FIG.1A

FIG.2A

n = 8

FIG.2B

n = 3

FIG. 3A

FIG. 3B

FIG. 4A

FIG. 4B